(19) Europäisches Patentamt
European Patent Office
Office européen des brevets

(11) **EP 4 074 866 B1**

(12) **EUROPEAN PATENT SPECIFICATION**

(45) Date of publication and mention
of the grant of the patent:
**20.09.2023 Bulletin 2023/38**

(21) Application number: **19956081.4**

(22) Date of filing: **09.12.2019**

(51) International Patent Classification (IPC):
*H02J 15/00* (2006.01)    *C25B 15/023* (2021.01)
*H02J 3/38* (2006.01)    *C25B 15/02* (2021.01)
*C25B 1/50* (2021.01)    *C25B 9/70* (2021.01)
*C25B 15/00* (2006.01)    *C25B 1/04* (2021.01)

(52) Cooperative Patent Classification (CPC):
**C25B 1/04; C25B 1/50; C25B 9/70; C25B 15/00;
C25B 15/02; C25B 15/023; H02J 15/008;**
Y02E 60/36; Y02E 70/30

(86) International application number:
**PCT/JP2019/048116**

(87) International publication number:
**WO 2021/117096 (17.06.2021 Gazette 2021/24)**

(54) **WATER ELECTROLYSIS DEVICE AND WATER ELECTROLYSIS SYSTEM**

WASSERELEKTROLYSEVORRICHTUNG UND WASSERELEKTROLYSESYSTEM

DISPOSITIF D'ÉLECTROLYSE DE L'EAU ET SYSTÈME D'ÉLECTROLYSE DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022 Bulletin 2022/42**

(73) Proprietor: **FUJITSU LIMITED**
**Kawasaki-shi, Kanagawa 211-8588 (JP)**

(72) Inventors:
• **YONEZAWA, Yu**
**Kawasaki-shi, Kanagawa 212-8510 (JP)**
• **TAKAUCHI, Hideki**
**Kawasaki-shi, Kanagawa 212-8510 (JP)**

• **NAKASHIMA, Yoshiyasu**
**Kawasaki-shi, Kanagawa 212-8510 (JP)**

(74) Representative: **Hoffmann Eitle**
**Patent- und Rechtsanwälte PartmbB**
**Arabellastraße 30**
**81925 München (DE)**

(56) References cited:
FR-A1- 2 960 560        JP-A- S57 123 989
JP-A- 2005 290 557      JP-A- 2018 165 396
JP-A- 2018 178 175      JP-A- 2019 052 377
JP-A- 2019 052 377      JP-A- 2019 085 602
US-A1- 2022 186 390

**Description**

[Technical Field]

The present disclosure relates to a water electrolysis apparatus and a water electrolysis system.

[Background Art]

Conventionally, there has been known a hydrogen gas generation device in which one Zener diode is connected in parallel to each of a plurality of electrolysis units connected in series. Even when a current does not flow through one electrolysis unit due to deterioration, a current flows through a Zener diode connected in parallel thereto, and hydrogen gas is generated in another electrolysis unit. Thus, even when a defect occurs in one of the plurality of electrolysis units, generation of hydrogen gas may be continued (see, for example, PTL 1). JP2019052377 also discloses the presence of bypasses and detection circuits around electrolysers in case of default.

[Citation List]

[Patent Literature]

[PTL 1] Japanese Laid-open Patent Publication No. 2018-165396.

[Summary]

[Technical Problem]

However, even when the electrolysis unit deteriorates, it is difficult to recognize the deterioration of the electrolysis unit because generation of hydrogen continues.
It is an object of the present disclosure to issue, even when one water electrolysis cell deteriorates, a warning signal without stopping water electrolysis in another water electrolysis cell.

[Solution to Problem]

The present disclosure provides a water electrolysis apparatus including: a plurality of water electrolysis cells connected in series; a plurality of detection circuits that is individually provided for the plurality of water electrolysis cells and that detects a current that flows through a bypass connected in parallel to a corresponding water electrolysis cell; and a signal output circuit that outputs a signal when a current value of the current detected by at least one of the plurality of detection circuits exceeds a threshold.
Furthermore, the present disclosure provides a water electrolysis system including: a power generation device; a plurality of water electrolysis cells connected in series; a power converter that converts an input voltage from the power generation device into an output voltage and applies the output voltage to both ends of the plurality of water electrolysis cells; a plurality of detection circuits that is individually provided for the plurality of water electrolysis cells and that detects a current that flows through a bypass connected in parallel to a corresponding water electrolysis cell; and a signal output circuit that outputs a signal when a current value of the current detected by at least one of the plurality of detection circuits exceeds a threshold.

[Advantageous Effects of Invention]

According to the technology of the present disclosure, even when one water electrolysis cell deteriorates, a warning signal may be issued without stopping water electrolysis in another water electrolysis cell.

[Brief Description of Drawings]

FIG. 1 is a diagram illustrating a configuration example of a water electrolysis system in a comparative form;
FIG. 2 is a diagram illustrating a structural example of a water electrolysis cell;
FIG. 3 is a diagram illustrating an example of electrical characteristics of the water electrolysis cell;
FIG. 4 is a diagram illustrating an example of electrical characteristics of a single water electrolysis cell;

FIG. 5 is a diagram illustrating a deteriorated state of one water electrolysis cell;

FIG. 6 is a diagram illustrating a configuration example of a water electrolysis system in an embodiment;

FIG. 7 is a diagram illustrating a current path at the time of deterioration in the comparative form;

FIG. 8 is a diagram illustrating a current path at the time of deterioration in the embodiment;

FIG. 9 is a diagram illustrating an equivalent circuit in the comparative form;

FIG. 10 is a diagram illustrating an equivalent circuit in the embodiment;

FIG. 11 is a diagram illustrating an equivalent circuit obtained by simplifying the equivalent circuit of FIG. 10;

FIG. 12 is a diagram illustrating an example of calculation results;

FIG. 13 is a diagram exemplarily illustrating a relationship between a cell voltage and a cell resistance;

FIG. 14 is a diagram illustrating a first structure example of a detection circuit;

FIG. 15 is a diagram exemplarily illustrating an operation of the first structure example of the detection circuit;

FIG. 16 is a diagram illustrating a second structure example of the detection circuit;

FIG. 17 is a diagram exemplarily illustrating an operation of the second structure example of the detection circuit;

FIG. 18 is a diagram illustrating a third structure example of the detection circuit; and

FIG. 19 is a diagram exemplarily illustrating an operation of the third structure example of the detection circuit.

[Description of Embodiments]

Hereinafter, an embodiment of the present disclosure will be described. First, a comparative form will be described for comparison with an embodiment of the present disclosure.

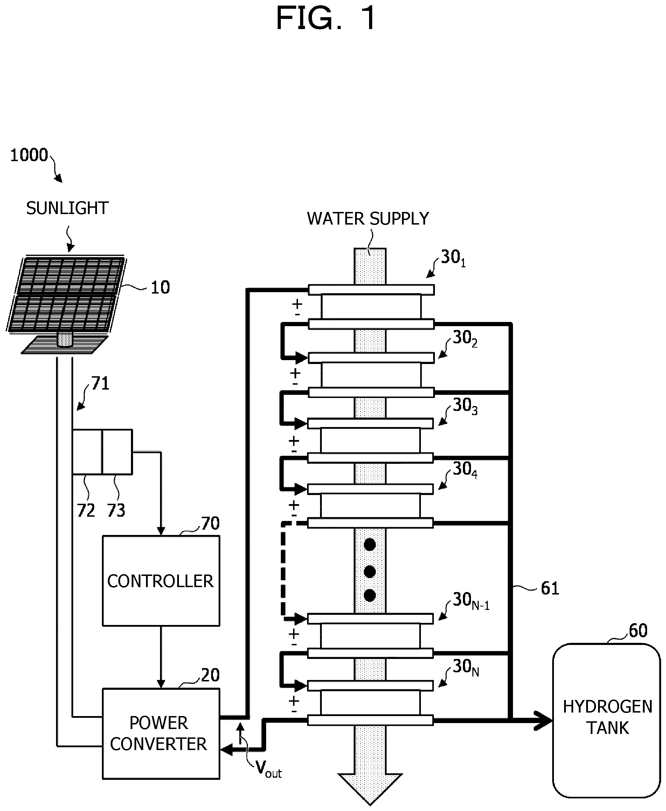

FIG. 1 is a diagram illustrating an example of a configuration of a water electrolysis system in the comparative form. A water electrolysis system 1000 illustrated in FIG. 1 generates hydrogen by electrolyzing water with electric energy generated by a solar panel 10. The water electrolysis system 1000 controls power drawn from the solar panel 10 so that the maximum power is output from the solar panel 10. The water electrolysis system 1000 includes the solar panel 10, a power converter 20, a plurality of cells $30_1$ to $30_N$, a maximum power point tracking (MPPT) controller 70, and a hydrogen tank 60. N is an integer equal to or greater than 2, and represents the number of cells connected in series. Each of the plurality of cells $30_1$ to $30_N$ is a water electrolysis cell having the same structure. Hereinafter, each structure, function, and the like will be described.

The solar panel 10 is an example of a power generation device that outputs a generated first direct current (DC) power, and includes a plurality of solar cells arranged on a panel surface. The solar cell uses a photovoltaic effect to convert light energy such as sunlight into DC power and output the DC power.

The solar cell has a current-voltage characteristic similar to that of a battery having a relatively large internal resistance, and a voltage drop occurs when a current is drawn. A maximum power point, which is determined by a current and voltage at which the maximum power may be drawn, changes depending on illuminance (solar radiation amount) illuminating the solar cell and temperature of the solar cell. When the illuminance is high, a power generation amount increases, and thus the maximum power increases. On the other hand, when the temperature of the solar cell rises, an internal resistance increases, and the maximum power decreases.

A method of controlling power drawn from a solar cell so as to always satisfy a maximum power point is called maximum power point tracking (MPPT) control, and the control method called a hill-climbing method is often used. The MPPT control is an effective technology for using a solar cell with high efficiency. In the following, output power at the maximum power point of the solar panel 10 is referred to as maximum power Psolar_max.

The MPPT controller 70 generates a control command value for bringing the output power of the solar panel 10 calculated by an ammeter 72 and a voltmeter 73 installed on an output line 71 of the solar panel 10 close to the maximum power Psolar_max. The MPPT controller 70 illustrated in FIG. 1 generates a control command value of the power converter 20, which is one of loads of the solar panel 10. The control command value may be a voltage command value that commands an output voltage of the power converter 20 (a target value of the output voltage of the power converter 20), or may be a duty ratio command value that commands a duty ratio that controls the output voltage of the power converter 20 (a target value of the duty ratio).

The power converter 20 is a DC-DC converter (DC: Direct Current) that converts the first DC power output from the solar panel 10 into a second DC power according to the control command value supplied from the MPPT controller 70, and outputs the second DC power. The power converter 20 converts an input voltage from the solar panel 10 into the output voltage $V_{out}$ according to the control command value supplied from the MPPT controller 70, and applies the output voltage $V_{out}$ to both ends of the plurality of cells $30_1$ to $30_N$ connected in series. With this configuration, a voltage obtained by dividing the output voltage $V_{out}$ is applied to both ends (between an anode and a cathode) of each of the plurality of cells $30_1$ to $30_N$.

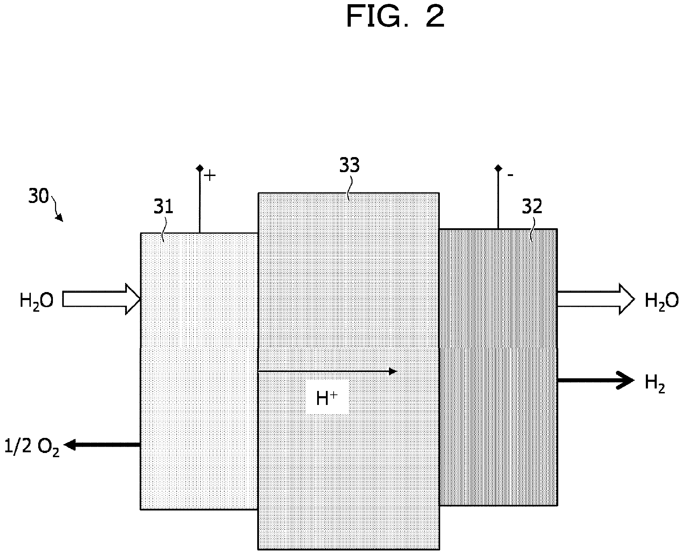

FIG. 2 is a diagram illustrating a structural example of the water electrolysis cell. A cell 30 represents one of the cells $30_1$ to $30_N$. The cell 30 is also referred to as an electrolytic bath. The cell 30 includes an anode 31, a cathode 32, and a diaphragm 33. The diaphragm 33 is sandwiched between the anode 31 and the cathode 32. Water ($H_2O$)

supplied to the anode 31 is electrolyzed by a voltage applied between the anode 31 and the cathode 32. By this electrolysis, oxygen ($O_2$) is generated at the anode 31, hydrogen ions ($H^+$) move from a side of the anode 31 through the diaphragm 33 to a side of the cathode 32, and hydrogen ($H_2$) is generated at the cathode 32. The oxygen generated at the anode 31 is released into the atmosphere or stored via an oxygen pipe. The hydrogen generated at the cathode 32 is stored in the hydrogen tank 60 via a hydrogen pipe 61 (see FIG. 1). The hydrogen stored in the hydrogen tank 60 is used as energy.

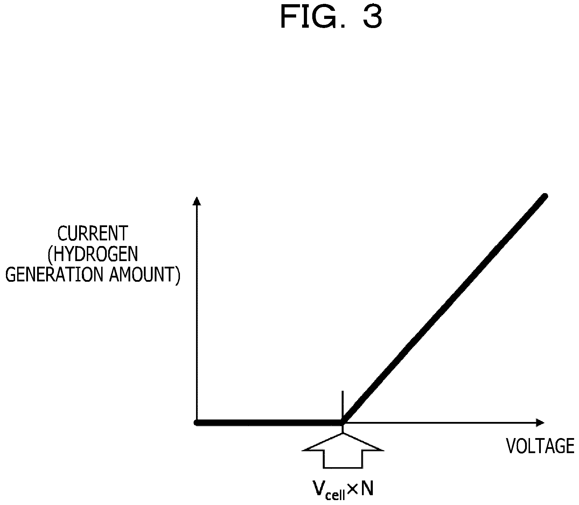

FIG. 3 is a diagram illustrating an example of electrical characteristics of the water electrolysis cell. The water electrolysis cell has a current-voltage characteristic similar to that of a diode, and a current suddenly flows out from a threshold voltage $V_{cell}$ of about 1 to 1.5 V, and electrolysis starts. When N cells are connected in series, a threshold voltage of the entire N cells connected in series is N times $V_{cell}$ ($V_{cell} \times N$). The greater a current flowing through the cell, the greater a hydrogen generation amount.

However, when the water electrolysis cell is continuously used, a resistance of the water electrolysis cell may increase due to deterioration of an electrode, and it may become difficult for a current to flow.

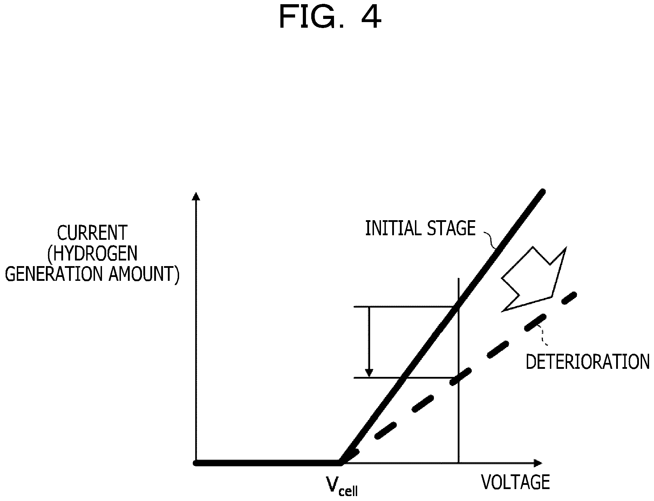

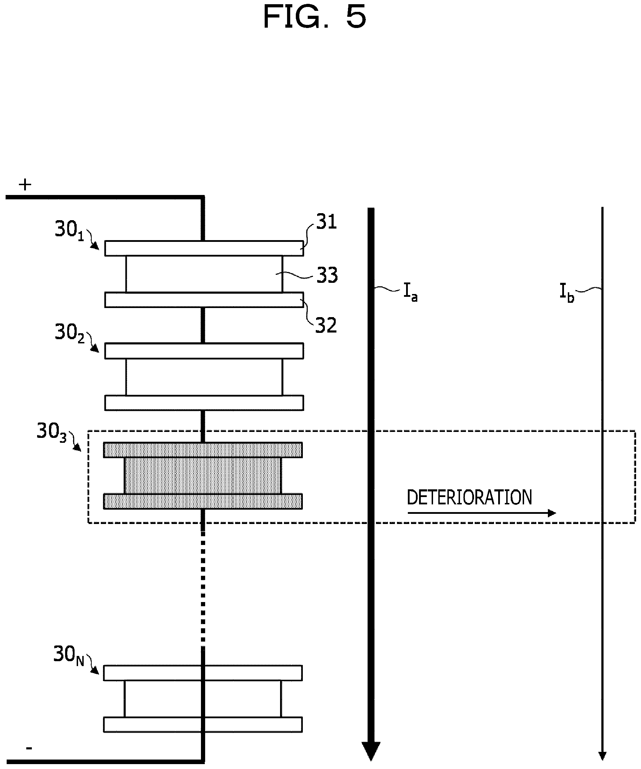

FIG. 4 is a diagram illustrating an example of electrical characteristics of a single water electrolysis cell. FIG. 5 is a diagram illustrating a deteriorated state of one water electrolysis cell. As illustrated in FIGs. 4 and 5, in a large number of water electrolysis cells in series, even when any one of the plurality of cells connected in series deteriorates, a total current amount decreases from $I_a$ to $I_b$. When the total current amount flowing through the plurality of cells connected in series decreases, a hydrogen generation amount also decreases. In order to guarantee a full-time operation of the water electrolysis system, it is preferable to perform system maintenance and replacement of each cell with a margin in a product guarantee period of each cell. Furthermore, even when any one of the cells deteriorates, generation of hydrogen continues, so that it is difficult to recognize the deterioration.

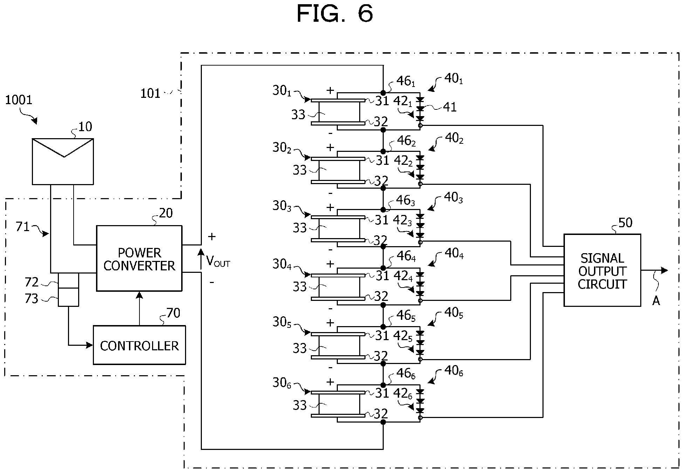

FIG. 6 is a diagram illustrating a configuration example of the water electrolysis system in an embodiment according to the present disclosure. The description of a configuration similar to the configuration illustrated in FIG. 1 will be omitted by consulting the description described above by reference. FIG. 6 exemplarily illustrates a case where the number N of cells connected in series is 6, but N may be an integer equal to or greater than 2. A water electrolysis system 1001 illustrated in FIG. 6 includes a solar panel 10 and a water electrolysis apparatus 101. The water electrolysis apparatus 101 includes a power converter 20, a plurality of cells $30_1$ to 30e, an MPPT controller 70, a plurality of detection circuits $40_1$ to $40_6$, and a signal output circuit 50.

The plurality of detection circuits $40_1$ to $40_6$ is individually provided for the plurality of cells $30_1$ to $30_6$, and is connected in parallel to the corresponding cells. The detection circuit $40_1$ is provided for the cell $30_1$ and is connected in parallel to the corresponding cell $30_1$, and the detection circuit $40_2$ is provided for the cell $30_2$ and is connected in parallel to the corresponding cell $30_2$. The same applies to the other detection circuits 40s to $40_6$. Each of the plurality of detection circuits $40_1$ to $40_6$ detects a current flowing through a bypass connected in parallel to the corresponding cell.

The signal output circuit 50 outputs a signal A when a current value of a current detected by at least one of the plurality of detection circuits $40_1$ to $40_6$ exceeds a threshold (hereinafter, also referred to as threshold $I_{th}$). The signal A is an example of a warning signal.

As deterioration of a cell progresses, a resistance of the cell increases, so that a current flows more easily through a detection circuit connected in parallel to the deteriorated cell than through the deteriorated cell. The water electrolysis system 1001 includes the plurality of detection circuits $40_1$ to $40_6$ individually connected in parallel to the plurality of cells $30_1$ to $30_6$, and the signal output circuit 50 that outputs the signal A when the current value of the current flowing through at least one of the plurality of detection circuits $40_1$ to $40_6$ exceeds the threshold $I_{th}$. Since the water electrolysis system 1001 includes such a configuration, even when one cell deteriorates, warning based on the signal A may be issued without stopping water electrolysis in another cell. By detecting the signal A itself or a signal based on the signal A, it becomes easy to recognize deterioration of any one of the cells from the outside.

The signal output circuit 50 may be formed by a logic circuit or may be formed by a circuit including a microcomputer including a processor. When the signal output circuit 50 is formed by a logic circuit, the function of the signal output circuit 50 is implemented by a combination of logic circuits. When the signal output circuit 50 is formed by a circuit including a microcomputer, the function of the signal output circuit 50 is implemented by processing that one or more programs installed in the microcomputer cause the processor to execute.

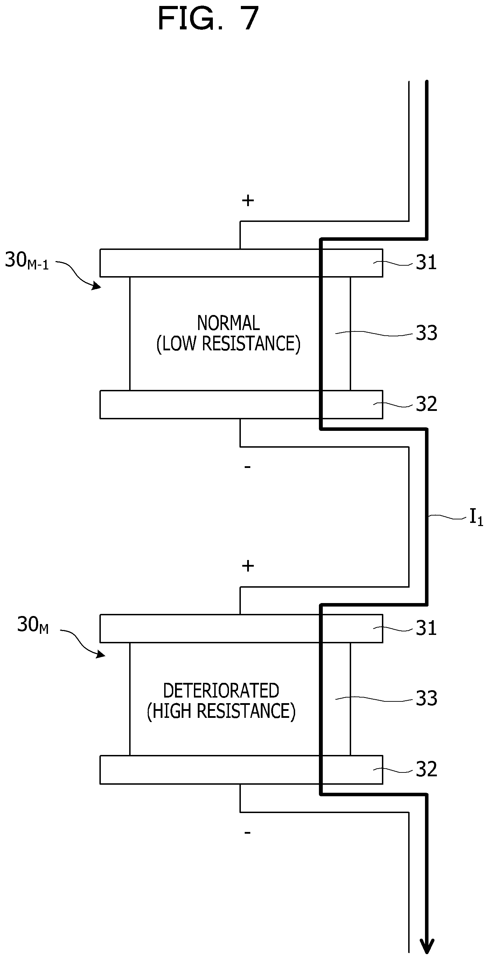

FIG. 7 is a diagram illustrating a current path at the time of deterioration in the comparative form (FIG. 1). M is an integer equal to or greater than 2 and equal to or less than N. When a cell $30_M$, which is a part, deteriorates, a resistance value of the cell $30_M$ becomes high. Thus, in the configuration illustrated in FIG. 7, a current $I_1$ flowing through the entire cells $30_M$ and $30_{M-1}$ connected in series is limited. When the cell $30_M$ deteriorates, not only a current flowing through the cell $30_M$ but also a current flowing through the normal cell $30_{M-1}$ connected in series to the cell $30_M$ decreases, so that a hydrogen generation amount in the entire system decreases.

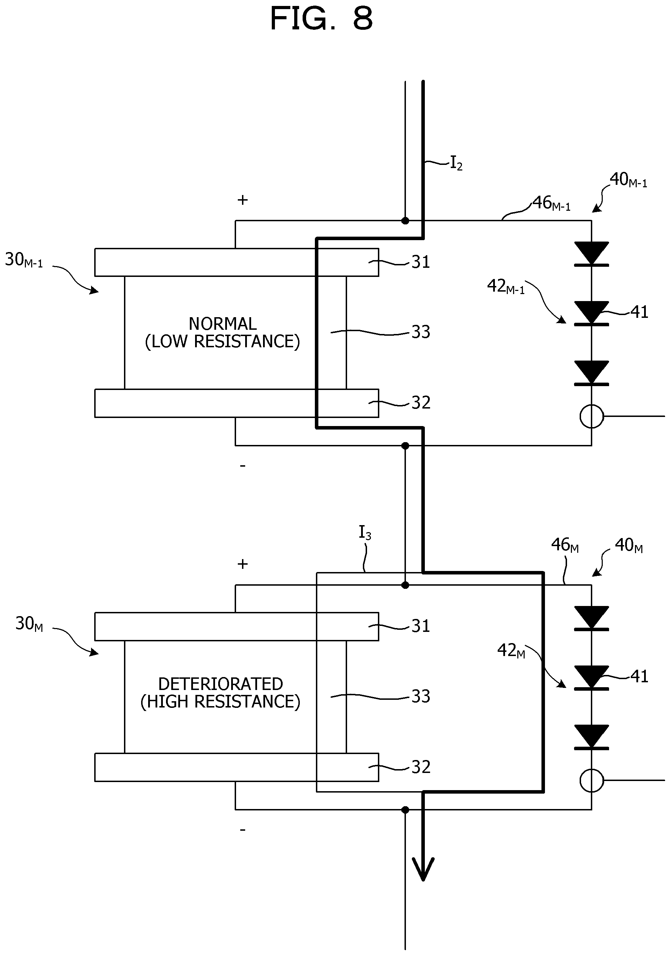

On the other hand, FIG. 8 is a diagram illustrating a current path at the time of deterioration in the embodiment (FIG. 6). When a cell $30_M$, which is a part, deteriorates, a resistance value of the cell $30_M$ increases, so that a current $I_3$ flowing through the cell $30_M$ decreases. On the other hand, since a current flows more easily through a detection circuit $40_M$ connected in parallel to the cell $30_M$ than through the deteriorated cell $30_M$, a current flowing through the detection circuit $40_M$ increases. In this way, since the high-resistance cell $30_M$ is bypassed by the detection circuit $40_M$, decrease in a current $I_2$ flowing through a normal cell $30_{M-1}$ is suppressed, and decrease in a hydrogen generation amount in the entire system may be suppressed.

The detection circuit $40_M$ includes a bypass $46_M$ connected in parallel to the corresponding cell $30_M$ and a limiting circuit $42_M$ that limits a current flowing through the bypass $46_M$. The bypass $46_M$ has one end electrically connected to the anode 31 of the corresponding cell $30_M$ and another end electrically connected to the cathode 32 of the corresponding cell $30_M$. The limiting circuit $42_M$ is inserted in series with the corresponding bypass $46_M$. The limiting circuit $42_M$ relaxes limitation of a current flowing through the bypass $46_M$ by a rise in a cell voltage of the corresponding cell $30_M$ (potential difference between both ends of the cell $30_M$). According to this configuration, it is possible to limit a current flow through the bypass $46_M$ before deterioration of the cell $30_M$. Furthermore, according to this configuration, when the cell $30_M$ deteriorates thereafter, the cell voltage of the cell $30_M$ rises due to a current flow through the cell $30_M$ having an increased resistance value, so that a current may more easily flow through the bypass $46_M$ rather than through the cell $30_M$.

In the form illustrated in FIG. 8, the limiting circuit $42_M$ includes at least one diode 41 inserted in series with the bypass $46_M$, and the diode 41 sets a direction of a current flowing through the bypass $46_M$ to a forward direction. With this configuration, the limiting circuit $42_M$ may limit the current flowing through the bypass $46_M$ when the cell voltage of the corresponding cell $30_M$ is lower than a predetermined value $V_R$ as compared with a case where the cell voltage of the corresponding cell $30_M$ is higher than the predetermined value $V_R$. The predetermined value $V_R$ is set to a voltage value higher than a threshold voltage $V_{cell}$ of the cell $30_M$, and is determined by the sum of forward voltages of at least one diode 41. When the cell voltage of the corresponding cell $30_M$ rises above the predetermined value $V_R$, the current limitation by the diode 41 is relaxed, so that a current may start flowing through the bypass $46_M$.

Similarly, a detection circuit $40_{M-1}$ includes a bypass $46_{M-1}$ connected in parallel to the corresponding cell $30_{M-1}$ and a limiting circuit $42_{M-1}$ that limits a current flowing through the bypass $46_{M-1}$. Since the configuration of the limiting circuit $42_{M-1}$ is the same as that of the limiting circuit $42_M$, description thereof will be omitted by consulting the description described above by reference.

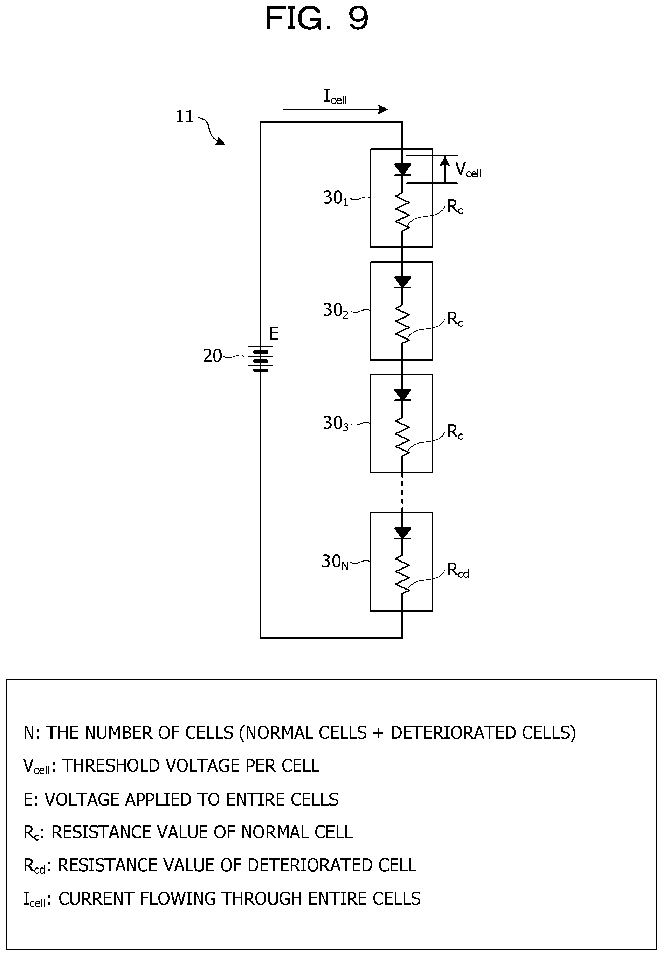

FIG. 9 is a diagram illustrating an equivalent circuit in the comparative form (FIG. 1). An equivalent circuit 11 illustrated in FIG. 9 is simplified to illustrate a current that flows constantly rather than a current that flows transiently. Specifically, in FIG. 9, a capacitor component connected in parallel to the cells is omitted. By using the equivalent circuit 11, a relationship between a total current amount and a hydrogen generation amount in a case where one water electrolysis cell deteriorates will be described. A current value of a current $I_{cell}$ flowing through the entire cells when a resistance value of any one cell $30_N$ among the plurality of cells $30_1$ to $30_N$ connected in series increases may be represented by:

[Expression 1]

$$I_{cell} = \frac{E - V_{cell} \cdot N}{R_c \cdot (N-1) + R_{cd}} \quad (1)$$

E represents a voltage applied to both ends of the plurality of cells $30_1$ to $30_N$ connected in series, $V_{cell}$ represents a threshold voltage per cell, and N represents the number of cells connected in series (the sum of normal cells and deteriorated cells). $R_c$ represents a resistance value of the normal cell, and $R_{cd}$ represents a resistance value of the deteriorated cell.

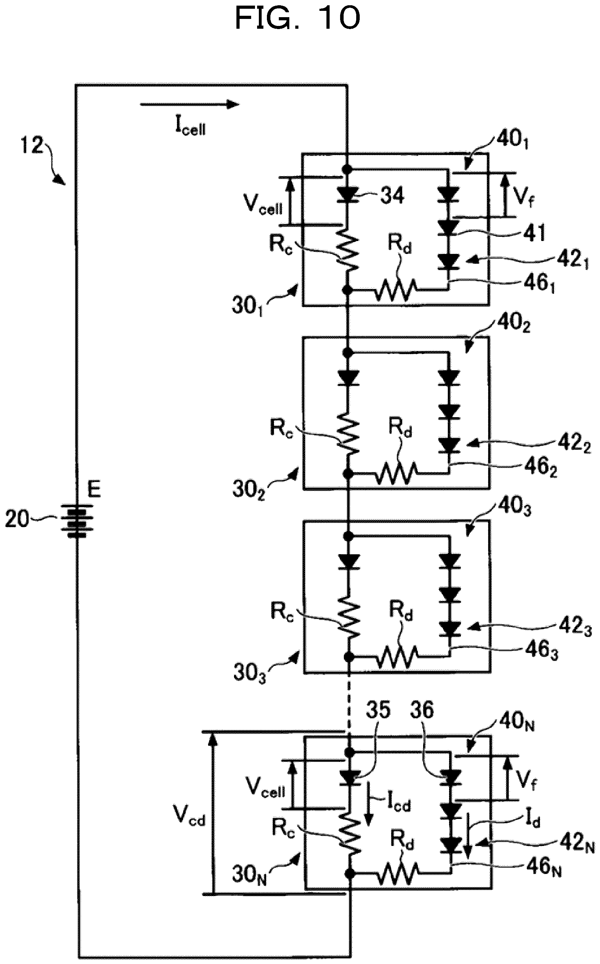

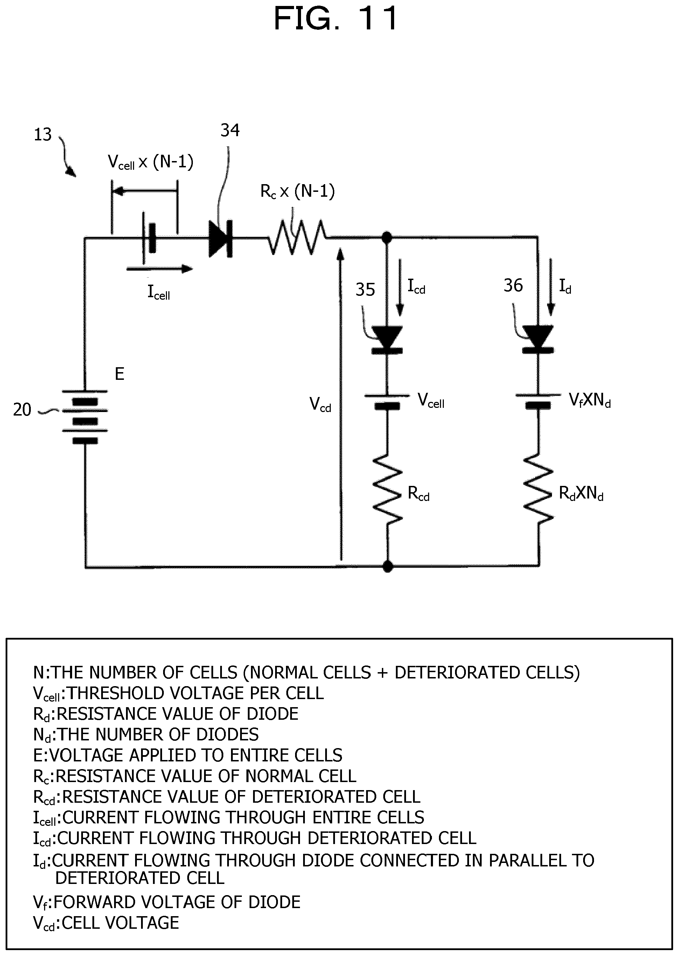

FIG. 10 is a diagram illustrating an equivalent circuit in the embodiment (FIG. 6). As in FIG. 9, in an equivalent circuit 12 illustrated in FIG. 10, a capacitor component connected in parallel to the cells is omitted. FIG. 11 is a diagram illustrating an equivalent circuit obtained by simplifying the equivalent circuit of FIG. 10. An equivalent circuit 13 illustrated in FIG. 11 is simplified by using ideal diodes 34, 35, and 36 and integrating circuits of the cells. In FIGs. 10 and 11, a current value of a current $I_{cell}$ flowing through the entire cells when a resistance value of any one cell $30_N$ among the plurality of cells $30_1$ to $30_N$ connected in series increases may be defined by classification into the following three states.

A state 1 indicates a state where a voltage between both ends of each of the cells $30_1$ to $30_N$ due to a divided voltage of a voltage E is lower than the threshold voltage $V_{cell}$ of each of the cells $30_1$ to $30_N$ and no current flows through the cells $30_1$ to $30_N$ and bypasses $46_1$ to $46_N$.

[Expression 2]

■ State 1

$$\text{Condition:} E < (V_{cell} \times N)$$

$$I_{cell} = 0$$

A state 2 indicates a state where the voltage between both ends of each of the cells $30_1$ to $30_N$ due to the divided voltage of the voltage E is higher than the threshold voltage $V_{cell}$ of each of the cells $30_1$ to $30_N$, and a current flows through the cells $30_1$ to $30_N$, but no current flows through the bypasses $46_1$ to $46_N$.

[Expression 3]

■ State 2

$$\text{Condition}: (V_{cell} \times N) < E < \left[ V_f \times N_d + V_{cell} \times (N - 1) \right]$$

$$I_d = 0$$

$$I_{cell} = \frac{E - V_{cell} \cdot N}{R_c \cdot (N - 1) + R_{cd}} \qquad (1)$$

A state 3 indicates a state where the voltage between both ends of each of the cells $30_1$ to $30_N$ due to the divided voltage of the voltage E is higher than the threshold voltage $V_{cell}$ of each of the cells $30_1$ to $30_N$ and a current flows through the cells $30_1$ to $30_N$ and the bypass $46_N$. In the state 3, since the voltage applied to both ends of the cell $30_N$ is higher than the predetermined value $V_R$ described above, which is a threshold that relaxes the current limitation, so that a current flows in the bypass $46_N$. However, in the state 3, since the voltage applied to both ends of each of the cells $30_1$ to $30_{N-1}$ is lower than the predetermined value $V_R$, no current flows through the bypasses $46_1$ to $46_{N-1}$.

[Expression 4]

■ State 3

$$\text{Condition}: \left[ V_f \times N_d + V_{cell} \times (N - 1) \right] < E$$

$$I_{cell} = I_{cd} + I_d \qquad (2)$$

$$I_{cd} = \frac{E - V_{cell} \cdot (N - 1) - I_{cell} \cdot R_c \cdot (N - 1) - V_{cell}}{R_{cd}} \qquad (3)$$

$$I_d = \frac{E - V_{cell} \cdot (N - 1) - I_{cell} \cdot R_c \cdot (N - 1) - V_f \cdot N_d}{R_d \cdot N_d} \qquad (4)$$

Substitute (3) and (4) for (2)

$$I_{cell} = \frac{E - V_{cell} \cdot (N - 1) - I_{cell} \cdot R_c \cdot (N - 1) - V_{cell}}{R_{cd}}$$
$$+ \frac{E - V_{cell} \cdot (N - 1) - I_{cell} \cdot R_c \cdot (N - 1) - V_f \cdot N_d}{R_d \cdot N_d} \qquad (5)$$

Merge as $I_{cell}$

$$I_{cell} = \frac{R_d \cdot N_d \cdot (E - V_{cell} \cdot (N - 1) - V_{cell}) + R_{cd}(E - V_{cell} \cdot (N - 1) - V_f \cdot N_d)}{R_{cd} \cdot R_d \cdot N_d + R_d \cdot N_d \cdot R_c \cdot (N - 1) + R_{cd} \cdot R_c \cdot (N - 1)} \qquad (6)$$

Furthermore, in FIGs. 9, 10, and 11, a hydrogen generation amount $V_{H2}$ per unit time in the entire cells $30_1$ to

$30_N$ is represented by:
[Expression 5]

$$V_{H2} = \frac{3600}{1000} \cdot \frac{n \cdot I_{cell} \cdot V_m}{2 \cdot F} \left[ \frac{Nm^3}{h} \right] \quad (7)$$

$$\begin{cases} F = 9.648533289 \times 10^4 \ [C/mol] \\ R = 0.082057338 \ [atm^{-1}] \\ V_m = \dfrac{R \cdot (273 + T)}{P} \ [l] \end{cases}$$

n represents the number of moles, $V_m$ represents a molar volume, F represents a Faraday constant, R represents a gas constant, T represents temperature, and P represents a pressure.

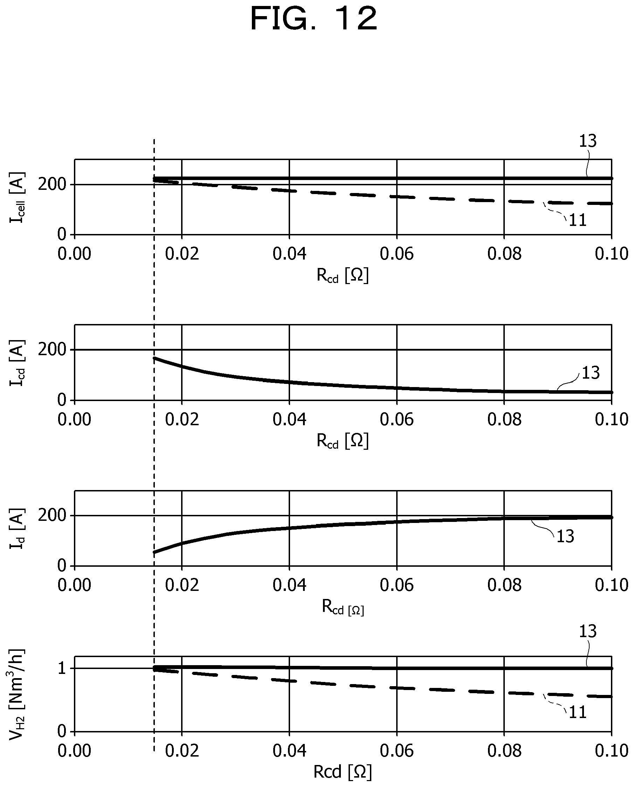

FIG. 12 is a diagram illustrating an example of calculation results. The current $I_{cell}$ indicates a calculation result of equation (1) (equivalent circuit 11) and a calculation result of equation (6) (equivalent circuit 13). A current $I_{cd}$ indicates a calculation result of equation (3) (equivalent circuit 13). A current $I_d$ indicates a calculation result of equation (4) (equivalent circuit 13). The hydrogen generation amount $V_{H2}$ indicates a calculation result of equation (7) (equivalent circuit 11 and equivalent circuit 13). As illustrated in FIG. 12, as compared with the equivalent circuit 11, the equivalent circuit 13 may suppress decrease in the current $I_{cell}$ even when a resistance value $R_{cd}$ of the deteriorated cell $30_N$ increases, and thus may suppress decrease in the hydrogen generation amount $V_{H2}$. For example, in a case where the resistance value $R_{cd}$ is a normal value of 10 [mΩ], the hydrogen generation amount $V_{H2}$ is 1.036 [Nm$^3$/h] in both the case of the equivalent circuit 11 and the case of the equivalent circuit 13. In a case where the resistance value $R_{cd}$ increases to 100 [mΩ], the hydrogen generation amount $V_{H2}$ decreases to 0.545 [Nm$^3$/h] in the case of the equivalent circuit 11, whereas the hydrogen generation amount $V_{H2}$ is suppressed to decrease to 1.002 [Nm$^3$/h] in the case of the equivalent circuit 13.

Note that calculation conditions in the calculation results in FIG. 12 are assumed to be:

the number N of cells: 10 [pieces],
the threshold voltage $V_{cell}$ per cell: 1.229 [V],
a resistance value $R_d$ of the diode: 1 [mΩ],
the number $N_d$ of diodes: 3 [pieces],
a resistance value $R_c$ of a normal cell: 10 [mΩ],
the resistance value $R_{cd}$ of the deteriorated cell: 100 [mΩ],
the voltage E applied to the entire cells: 35 [V], and
a forward voltage $V_f$ of the diode: 1.2 [V].

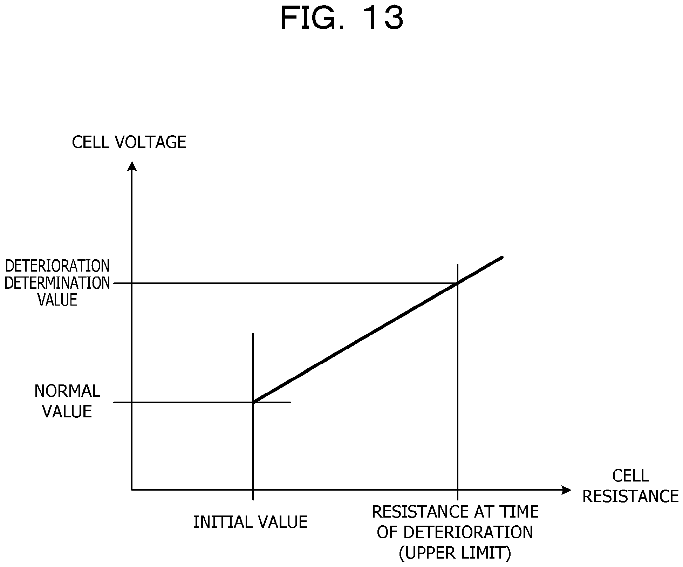

FIG. 13 is a diagram exemplarily illustrating a relationship between a cell voltage and a cell resistance. The sum of forward voltages of one or the plurality of diodes 41 connected in parallel to one cell is preferably between a minimum value and a maximum value of a cell voltage of the corresponding cell. In FIG. 13, a normal value of the cell voltage is an example of the minimum value of the cell voltage, and a deterioration determination value of the cell voltage is an example of the maximum value of the cell voltage. The normal value of the cell voltage represents a voltage value generated at both ends of a cell in an initial state before the cell deteriorates. The deterioration determination value of the cell voltage represents a product of a resistance upper limit value of a deteriorated cell and a maximum current flowing through the cell. The resistance upper limit value of the deteriorated cell is specified by a manufacturer of the cell.

Since the sum of the forward voltages of the diode 41 is between the minimum value and the maximum value of the cell voltages of the corresponding cell, a current flowing through the diode 41 may be blocked at a normal time before deterioration, while a current may be allowed to flow through the diode 41 before the resistance value of the cell reaches the upper limit value.

The number $N_d$ of the diodes 41 connected in parallel to one cell is preferably set to an integer greater than (normal value of cell voltage/forward voltage $V_f$ of one diode) and smaller than (deterioration determination value of cell voltage/ forward voltage $V_f$ of one diode). For example, it is assumed that a cell with an initial resistance of 100 [mΩ] has increased to an upper limit of 200 [mΩ]. In this case, when it is assumed that the maximum current is 20 [A], the cell voltage rises to 4 [V]. When it is assumed that the forward voltage $V_f$ of the diode is 1.2 [V], the number $N_d$ is set to 3.

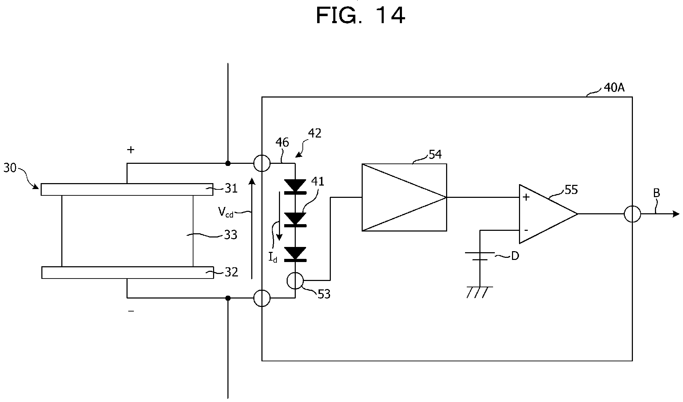

FIG. 14 is a diagram illustrating a first structure example of the detection circuit. A cell 30 represents one of the cells $30_1$ to $30_N$. A detection circuit 40A illustrated in FIG. 14 is connected in parallel to one cell 30 corresponding to itself. When a current value of a current $I_d$ flowing through a bypass 46 exceeds the predetermined threshold $I_{th}$, the

detection circuit 40A generates a detection output B representing that deterioration of the cell 30 is detected. A module not illustrated in FIG. 14 issues a warning message when receiving the detection output B. In the structure illustrated in FIG. 14, the threshold $I_{th}$ is set by a detection threshold D. The detection circuit 40A includes the bypass 46 connected in parallel to the cell 30, a sensor 53 that detects a current flowing through the bypass 46, an amplifier 54 that amplifies an output voltage of the sensor 53, and a comparator 55 that compares an output voltage of the amplifier 54 with the detection threshold D.

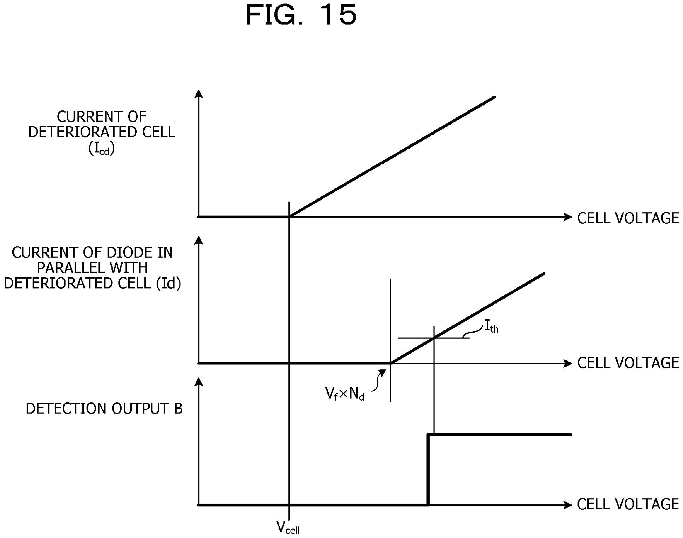

FIG. 15 is a diagram exemplarily illustrating an operation of the first structure example (FIG. 14) of the detection circuit, and exemplarily illustrates a relationship among the current $I_{cd}$, the current $I_d$, and the detection output B. When a voltage applied to both ends of the cell 30 (cell voltage $V_{cd}$) exceeds the threshold voltage $V_{cell}$, the current $I_{cd}$ starts to flow through the cell 30. When the cell voltage $V_{cd}$ exceeds the predetermined value $V_R$ (= $V_f \times N_d$), the current $I_d$ starts to flow through the bypass 46 connected in parallel to the cell 30. The threshold $I_{th}$ is set by the detection threshold D. In a state where the current value of the current $I_d$ is lower than the threshold $I_{th}$ (that is, a state where the output voltage of the amplifier 54 is lower than the detection threshold D), the comparator 55 generates a low-level detection output B representing that deterioration of the cell 30 is not detected. On the other hand, in a state where the current value of the current $I_d$ is higher than the threshold $I_{th}$ (that is, a state where the output voltage of the amplifier 54 is higher than the detection threshold D), the comparator 55 generates a high-level detection output B representing that deterioration of the cell 30 is detected. The detection output B is input to the signal output circuit 50 (see FIG. 6). When the high-level detection output B is input from any of the detection circuits, the signal output circuit 50 outputs the signal A.

A criterion for allowing decrease in a hydrogen generation amount due to increase in a resistance value of a water electrolysis cell, a criterion for generating a high-level detection output B, and a criterion for outputting a signal A vary from system to system. By changing the detection threshold D of the comparator 55, those criteria may be easily set and changed.

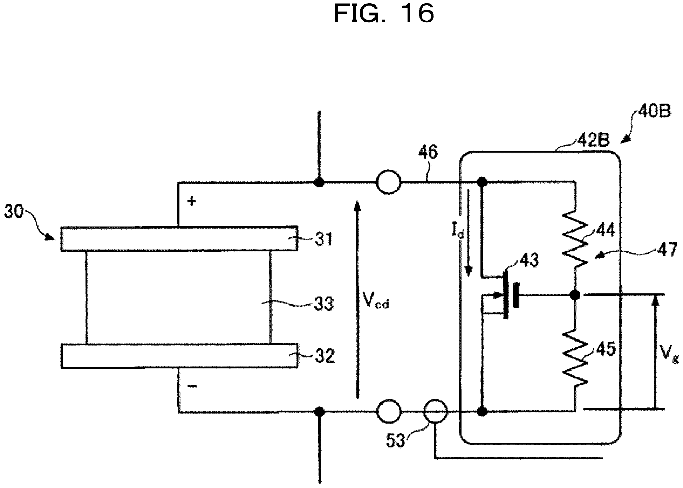

FIG. 16 is a diagram illustrating a second structure example of the detection circuit. A cell 30 represents one of the cells $30_1$ to $30_N$. A detection circuit 40B illustrated in FIG. 16 is connected in parallel to one cell 30 corresponding to itself. The detection circuit 40B includes a limiting circuit 42B that limits a current $I_d$ flowing through a bypass 46. The limiting circuit 42B includes a switch 43 inserted in series with the bypass 46. The switch 43 is a switching element that is turned on by a rise in a cell voltage $V_{cd}$ of the corresponding cell 30, and more specifically, the switch 43 is an N-channel type field effect transistor (FET). The limiting circuit 42B includes a voltage dividing circuit 47 that divides the cell voltage $V_{cd}$ of the corresponding cell 30. Based on output of the voltage dividing circuit 47, the switch 43 is turned on.

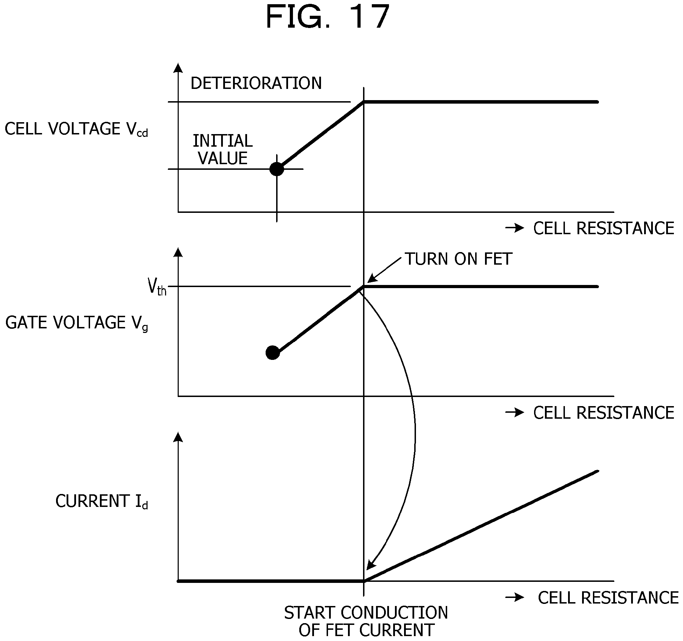

FIG. 17 is a diagram exemplarily illustrating an operation of the second structure example (FIG. 16) of the detection circuit. As a resistance value of the cell 30 increases, the cell voltage $V_{cd}$ rises. As the cell voltage $V_{cd}$ rises, a gate voltage $V_g$ obtained by dividing the cell voltage $V_{cd}$ by resistances 44 and 45 of the voltage dividing circuit 47 also rises. When the gate voltage $V_g$ exceeds a threshold voltage $V_{th}$ of the switch 43, the current $I_d$ starts to flow through the switch 43. By changing resistance values of the resistances 44 and 45, a switching threshold for whether or not to allow the current to flow through the bypass 46 may be easily set and changed.

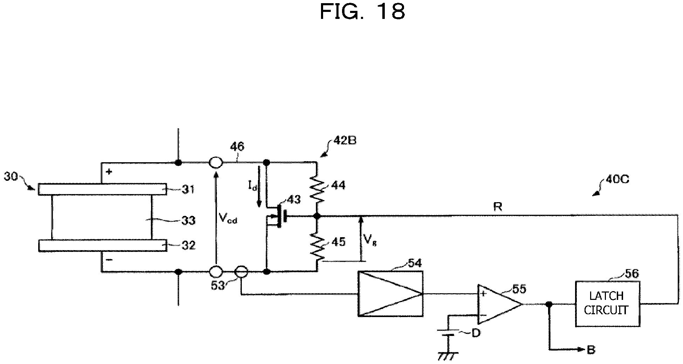

FIG. 18 is a diagram illustrating a third structure example of the detection circuit. A cell 30 represents one of the cells $30_1$ to $30_N$. A detection circuit 40C illustrated in FIG. 18 is connected in parallel to one cell 30 corresponding to itself. The detection circuit 40C includes a limiting circuit 42B that limits a current $I_d$ flowing through a bypass 46. The limiting circuit 42B includes a latch circuit 56 that holds an on-state of a switch 43 based on a detection output B of a comparator 55 even when a cell voltage $V_{cd}$ of the corresponding cell 30 decreases. The latch circuit 56 outputs, when the detection output B of the comparator 55 is switched from a low level to a high level, a high-level on signal R that holds the on-state of the switch 43. The latch circuit 56 continues to output the high-level on signal R even when the detection output B of the comparator 55 is thereafter switched to the low level again. Since both ends of the cell 30 are short-circuited by turning on the switch 43, it is possible to allow the current to flow through the bypass 46 without allowing the current to flow through the deteriorated cell 30.

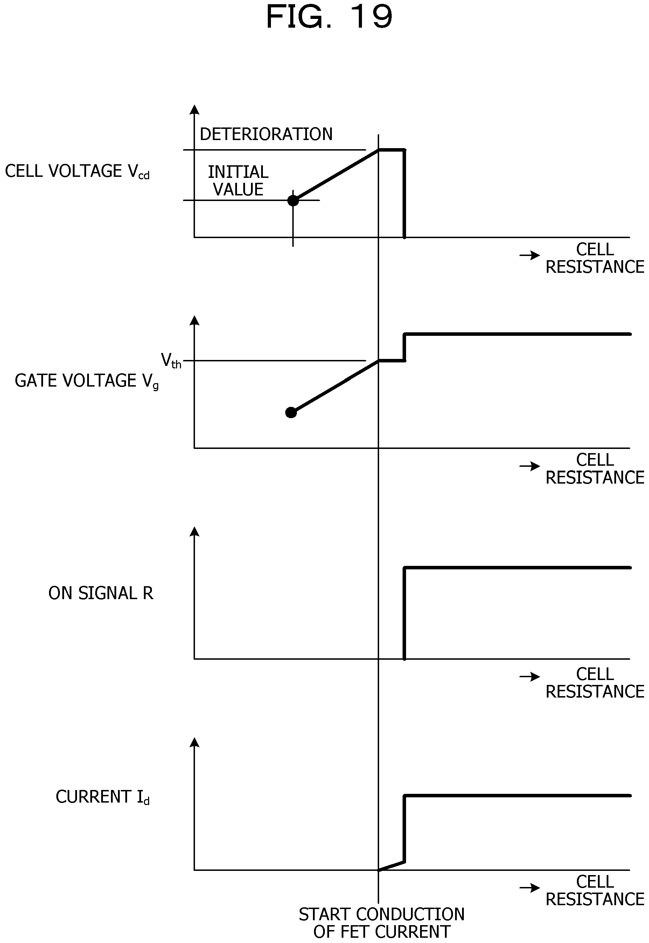

FIG. 19 is a diagram exemplarily illustrating an operation of the third structure example (FIG. 18) of the detection circuit. As a resistance value of the cell 30 increases, the cell voltage $V_{cd}$ rises. As the cell voltage $V_{cd}$ rises, a gate voltage $V_g$ obtained by dividing the cell voltage $V_{cd}$ by resistances 44 and 45 of a voltage dividing circuit 47 also rises. When the gate voltage $V_g$ exceeds a threshold voltage $V_{th}$ of the switch 43, the current $I_d$ starts to flow through the switch 43. When the current value of the current $I_d$ exceeds a threshold $I_{th}$ determined by a detection threshold D, the detection output B switches to the high level and a high-level on signal R is output. When the high-level on signal R is output, the switch 43 is turned on, so that the voltage value of the cell voltage $V_{cd}$ decreases to substantially zero. Even when the voltage value of the cell voltage $V_{cd}$ decreases to substantially zero and the detection output B switches to the low level again, the latch circuit 56 holds the on signal R at the high level. In this way, since both ends of the deteriorated cell 30 are held in the short-circuited state, it is possible to prevent the current from continuing to flow through the deteriorated cell 30.

While the embodiment has been described thus far, the technology of the present disclosure is not limited to the embodiment described above. Various modifications and improvements such as combination and replacement with some or all of other embodiments are possible.

For example, the power generation device is not limited to a device that generates power by using sunlight, which is one type of renewable energy, and may be a device that generates power by using another type of renewable energy such as wind power.

[Reference Signs List]

10 Solar panel
11, 12, 13 Equivalent circuit
20 Power converter
30, $30_1$ to $30_N$ Water electrolysis cell
31 Anode
32 Cathode
33 Diaphragm
40A, 40B, 40C, $40_1$ to $40_N$ Detection circuit
4 1 Diode
42, $42_1$ to $42_N$, 42B Limiting circuit
43 Switch
46, $46_1$ to $46_N$ Bypass
47 Voltage dividing circuit
50 Signal output circuit
53 Sensor
54 Amplifier
55 Comparator
56 Latch circuit
60 Hydrogen tank
70 MPPT controller
101 Water electrolysis apparatus
1000, 1001 Water electrolysis system

**Claims**

1.  A water electrolysis apparatus comprising:

    a plurality of water electrolysis cells connected in series;
    a plurality of detection circuits that is individually provided for the plurality of water electrolysis cells and that detects a current that flows through a bypass connected in parallel to a corresponding water electrolysis cell; and
    a signal output circuit that outputs a signal when a current value of the current detected by at least one of the plurality of detection circuits exceeds a threshold.

2.  The water electrolysis apparatus according to claim 1, wherein

    each of the plurality of detection circuits includes a limiting circuit that limits the current that flows through the bypass, and
    the limiting circuit relaxes a limitation of the current that flows through the bypass by a rise in a cell voltage of the corresponding water electrolysis cell.

3.  The water electrolysis apparatus according to claim 2, wherein the limiting circuit limits the current that flows through the bypass when the cell voltage of the corresponding water electrolysis cell is lower than a predetermined value as compared with a case where the cell voltage of the corresponding water electrolysis cell is higher than the predetermined value.

4.  The water electrolysis apparatus according to claim 2 or 3, wherein

    the limiting circuit includes at least one diode inserted in series with the bypass, and

the diode sets a direction of the current that flows through the bypass to a forward direction.

5. The water electrolysis apparatus according to claim 4, wherein a sum of forward voltages of the diode is between a minimum value and a maximum value of the cell voltage of the corresponding water electrolysis cell.

6. The water electrolysis apparatus according to claim 2 or 3, wherein

the limiting circuit includes a switch inserted in series with the bypass, and
the switch is turned on by a rise in the cell voltage of the corresponding water electrolysis cell.

7. The water electrolysis apparatus according to claim 6, wherein

the limiting circuit includes a voltage dividing circuit that divides the cell voltage of the corresponding water electrolysis cell, and
the switch is turned on based on output of the voltage dividing circuit.

8. The water electrolysis apparatus according to claim 6 or 7, wherein the limiting circuit includes a latch circuit that holds an on-state of the switch even when the cell voltage of the corresponding water electrolysis cell decreases.

9. The water electrolysis apparatus according to any one of claims 1 to 8, wherein each of the plurality of detection circuits includes:

a sensor that detects the current that flows through the bypass;
an amplifier that amplifies output of the sensor; and
a comparator that compares output of the amplifier with a detection threshold.

10. The water electrolysis apparatus according to any one of claims 1 to 9, further comprising a power converter that applies a voltage to both ends of the plurality of water electrolysis cells.

11. A water electrolysis system comprising:

a power generation apparatus;
a water electrolysis apparatus according to any one of claims 1 to 9; and
a power converter that converts an input voltage from the power generation apparatus into an output voltage, and applies the output voltage to both ends of the plurality of water electrolysis cells.

**Patentansprüche**

1. Wasserelektrolysevorrichtung, umfassend:

eine Vielzahl von Wasserelektrolysezellen, die in Reihe geschaltet sind;
eine Vielzahl von Erfassungsschaltungen, die einzeln für die Vielzahl von Wasserelektrolysezellen bereitgestellt ist, und die einen Strom erfasst, der durch einen Bypass fließt, der parallel zu einer entsprechenden Wasserelektrolysezelle geschaltet ist; und
eine Signalausgangsschaltung, die ein Signal ausgibt, wenn ein Stromwert des von mindestens einer der Vielzahl von Erfassungsschaltungen erfassten Stroms einen Schwellenwert überschreitet.

2. Wasserelektrolysevorrichtung nach Anspruch 1, wobei

jede der Vielzahl von Erfassungsschaltungen eine Begrenzungsschaltung einschließt, die den Strom, der durch den Bypass fließt, begrenzt, und
die Begrenzungsschaltung eine Begrenzung des Stroms, der durch den Bypass fließt, durch einen Anstieg der Zellspannung der entsprechenden Wasserelektrolysezelle lockert.

3. Wasserelektrolysevorrichtung nach Anspruch 2, wobei die Begrenzungsschaltung den Strom, der durch den Bypass fließt, begrenzt, wenn die Zellspannung der entsprechenden Wasserelektrolysezelle niedriger als ein vorbestimmter Wert ist, verglichen mit einem Fall, in dem die Zellspannung der entsprechenden Wasserelektrolysezelle höher als der vorbestimmte Wert ist.

4. Wasserelektrolysevorrichtung nach Anspruch 2 oder 3, wobei

die Begrenzungsschaltung mindestens eine Diode einschließt, die in Reihe mit dem Bypass geschaltet ist, und die Diode eine Richtung des Stroms, der durch den Bypass fließt, auf eine Durchlassrichtung einstellt.

5. Wasserelektrolysevorrichtung nach Anspruch 4, wobei eine Summe von Durchlassspannungen der Diode zwischen einem Minimalwert und einem Maximalwert der Zellspannung der entsprechenden Wasserelektrolysezelle liegt.

6. Wasserelektrolysevorrichtung nach Anspruch 2 oder 3, wobei

die Begrenzungsschaltung einen Schalter einschließt, der in Reihe mit dem Bypass geschaltet ist, und der Schalter durch einen Anstieg der Zellenspannung der entsprechenden Wasserelektrolysezelle eingeschaltet wird.

7. Wasserelektrolysevorrichtung nach Anspruch 6, wobei

die Begrenzungsschaltung eine Spannungsteilerschaltung einschließt, die die Zellenspannung der entsprechenden Wasserelektrolysezelle teilt, und der Schalter auf der Grundlage der Ausgabe der Spannungsteilerschaltung eingeschaltet wird.

8. Wasserelektrolysevorrichtung nach Anspruch 6 oder 7, wobei die Begrenzungsschaltung eine Verriegelungsschaltung einschließt, die den Einschaltzustand des Schalters auch dann beibehält, wenn die Zellspannung der entsprechenden Wasserelektrolysezelle abnimmt.

9. Wasserelektrolysevorrichtung nach einem der Ansprüche 1 bis 8, wobei jede der Vielzahl von Erfassungsschaltungen Folgendes einschließt:

einen Sensor, der den Strom erfasst, der durch den Bypass fließt; einen Verstärker, der die Ausgabe des Sensors verstärkt; und einen Komparator, der die Ausgabe des Verstärkers mit einer Erfassungsschwelle vergleicht.

10. Wasserelektrolysevorrichtung nach einem der Ansprüche 1 bis 9, weiter umfassend einen Stromrichter, der eine Spannung an beide Enden der Vielzahl von Wasserelektrolysezellen anlegt.

11. Wasserelektrolysesystem, umfassend:

eine Stromerzeugungsvorrichtung; ein Wasserelektrolysevorrichtung nach einem der Ansprüche 1 bis 9; und einen Stromwandler, der eine Eingangsspannung von der Stromerzeugungsvorrichtung in eine Ausgangsspannung konvertiert und die Ausgangsspannung an beide Enden der Vielzahl von Wasserelektrolysezellen anlegt.

**Revendications**

1. Appareil d'électrolyse de l'eau comprenant :

une pluralité de cellules d'électrolyse de l'eau reliées en série ; une pluralité de circuits de détection qui est individuellement fournie pour la pluralité de cellules d'électrolyse de l'eau et qui détecte un courant qui s'écoule dans un circuit de dérivation relié en parallèle à la cellule d'électrolyse de l'eau correspondante ; et un circuit de sortie de signal qui délivre un signal lorsqu'une valeur de courant du courant détecté par au moins un de la pluralité de circuits de détection dépasse un seuil.

2. Appareil d'électrolyse de l'eau selon la revendication 1, dans lequel

chacun de la pluralité de circuits de détection inclut un circuit limiteur qui limite le courant qui s'écoule dans le circuit de dérivation, et

le circuit limiteur libère une limite du courant qui s'écoule dans le circuit de dérivation par une augmentation de la tension de cellule de la cellule d'électrolyse de l'eau correspondante.

3. Appareil d'électrolyse de l'eau selon la revendication 2, dans lequel le circuit limiteur limite le courant qui s'écoule dans le circuit de dérivation lorsque la tension de cellule de la cellule d'électrolyse de l'eau correspondante est inférieure à une valeur prédéterminée par comparaison à un cas où la tension de cellule de la cellule d'électrolyse de l'eau correspondante est supérieure à la valeur prédéterminée.

4. Appareil d'électrolyse de l'eau selon la revendication 2 ou la revendication 3, dans lequel

le circuit limiteur inclut au moins une diode insérée en série avec le circuit de dérivation, et
la diode définit une direction du courant qui s'écoule dans le circuit de dérivation à une direction avant.

5. Appareil d'électrolyse de l'eau selon la revendication 4, dans lequel une somme de tensions directes de la diode est comprise entre une valeur minimale et une valeur maximale de la tension de cellule de la cellule d'électrolyse de l'eau correspondante.

6. Appareil d'électrolyse de l'eau selon la revendication 2 ou la revendication 3, dans lequel

le circuit limiteur inclut un commutateur inséré en série avec le circuit de dérivation, et
le commutateur est enclenché par une augmentation de la tension de cellule de la cellule d'électrolyse de l'eau correspondante.

7. Appareil d'électrolyse de l'eau selon la revendication 6, dans lequel

le circuit limiteur inclut un circuit de division de tension qui divise la tension de cellule de la cellule d'électrolyse de l'eau correspondante, et
le commutateur est enclenché sur la base d'une sortie du circuit de division de tension.

8. Appareil d'électrolyse de l'eau selon la revendication 6 ou la revendication 7, dans lequel le circuit limiteur inclut un circuit de verrouillage qui maintient un état enclenché du commutateur même si la tension de cellule de la cellule d'électrolyse de l'eau correspondante diminue.

9. Appareil d'électrolyse de l'eau selon l'une quelconque des revendications 1 à 8, dans lequel chacun de la pluralité de circuits de détection inclut :

un capteur qui détecte le courant qui s'écoule dans le circuit de dérivation ;
un amplificateur qui amplifie la sortie du capteur ; et
un comparateur qui compare la sortie de l'amplificateur à un seuil de détection.

10. Appareil d'électrolyse de l'eau selon l'une quelconque des revendications 1 à 9, comprenant en outre un convertisseur de puissance qui applique une tension aux deux extrémités de la pluralité de cellules d'électrolyse de l'eau.

11. Système d'électrolyse de l'eau comprenant :

un appareil de génération de puissance ;
un appareil d'électrolyse de l'eau selon l'une quelconque des revendications 1 à 9 ; et
un convertisseur de puissance qui convertit une tension d'entrée de l'appareil de génération de puissance en une tension de sortie, et applique la tension de sortie aux deux extrémités de la pluralité de cellules d'électrolyse de l'eau.

# FIG. 1

# FIG. 2

# FIG. 3

CURRENT
(HYDROGEN
GENERATION AMOUNT)

VOLTAGE

$V_{cell} \times N$

# FIG. 4

CURRENT
(HYDROGEN
GENERATION AMOUNT)

INITIAL STAGE

DETERIORATION

$V_{cell}$

VOLTAGE

# FIG. 5

# FIG. 6

# FIG. 7

# FIG. 8

# FIG. 9

N: THE NUMBER OF CELLS (NORMAL CELLS + DETERIORATED CELLS)

$V_{cell}$: THRESHOLD VOLTAGE PER CELL

E: VOLTAGE APPLIED TO ENTIRE CELLS

$R_c$: RESISTANCE VALUE OF NORMAL CELL

$R_{cd}$: RESISTANCE VALUE OF DETERIORATED CELL

$I_{cell}$: CURRENT FLOWING THROUGH ENTIRE CELLS

# FIG. 10

# FIG. 11

N:THE NUMBER OF CELLS (NORMAL CELLS + DETERIORATED CELLS)
$V_{cell}$:THRESHOLD VOLTAGE PER CELL
$R_d$:RESISTANCE VALUE OF DIODE
$N_d$:THE NUMBER OF DIODES
E:VOLTAGE APPLIED TO ENTIRE CELLS
$R_c$:RESISTANCE VALUE OF NORMAL CELL
$R_{cd}$:RESISTANCE VALUE OF DETERIORATED CELL
$I_{cell}$:CURRENT FLOWING THROUGH ENTIRE CELLS
$I_{cd}$:CURRENT FLOWING THROUGH DETERIORATED CELL
$I_d$:CURRENT FLOWING THROUGH DIODE CONNECTED IN PARALLEL TO DETERIORATED CELL
$V_f$:FORWARD VOLTAGE OF DIODE
$V_{cd}$:CELL VOLTAGE

# FIG. 12

# FIG. 13

CELL VOLTAGE

DETERIORATION
DETERMINATION
VALUE

NORMAL
VALUE

CELL
RESISTANCE

INITIAL VALUE

RESISTANCE AT TIME
OF DETERIORATION
(UPPER LIMIT)

# FIG. 14

# FIG. 15

CURRENT OF
DETERIORATED CELL
$(I_{cd})$

CELL VOLTAGE

CURRENT OF DIODE IN
PARALLEL WITH
DETERIORATED CELL (Id)

$I_{th}$

CELL VOLTAGE

$V_f \times N_d$

DETECTION OUTPUT B

CELL VOLTAGE

$V_{cell}$

# FIG. 16

# FIG. 17

FIG. 18

# FIG. 19

CELL VOLTAGE V_cd

DETERIORATION

INITIAL VALUE

CELL RESISTANCE

GATE VOLTAGE V_g

V_th

CELL RESISTANCE

ON SIGNAL R

CELL RESISTANCE

CURRENT I_d

CELL RESISTANCE

START CONDUCTION OF FET CURRENT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019052377 B
- JP 2018165396 A